# FASCICULE DE BREVET EUROPEEN

(11) **EP 3 234 338 B1**
(45) Date de publication et mention de la délivrance du brevet: **04.03.2020**
(21) Numéro de dépôt: 15821132.6
(22) Date de dépôt: 15.12.2015
(51) Int. Cl.: F04D 29/42, F02M 35/10, F04D 29/44

(54) **INSERT CONIQUE POUR CORNE D'UN CONDUIT D'ALIMENTATION DE TURBOCOMPRESSEUR**
KONISCHER EINSATZ FÜR EINEN FLANSCH EINER TURBOLADERVERSORGUNGSLEITUNG
CONICAL INSERT FOR A FLANGE OF A TURBOCHARGER SUPPLY CONDUIT

(30) Priorité: 17.12.2014 FR 1462606
(43) Date de publication de la demande: 25.10.2017
(73) Titulaire: RENAULT s.a.s., 92100 Boulogne-Billancourt (FR)
(72) Inventeur: CHALMETTE, Bruno, 92150 Suresnes (FR); ROBIN, Bruno, 95220 Herblay (FR)
(86) Numéro de dépôt international: PCT/FR2015/053523
(87) Numéro de publication internationale: WO 2016/097591

(56) Documents cités:
- WO-A1-2009/068181
- WO-A1-2014/030248
- WO-A2-2012/036909
- DE-A1-102007 021 687
- DE-A1-102011 110 285

## Description

### Domaine technique de l'invention

L'invention concerne le domaine d'une corne pour conduit d'alimentation d'un turbocompresseur, comprenant un corps tubulaire ayant des éléments de fixation permettant de raccorder une première extrémité du corps tubulaire à une entrée du turbocompresseur.

L'invention a pour objet également un groupe motopropulseur comprenant un turbocompresseur et un conduit d'alimentation destiné à alimenter en fluide l'entrée du turbocompresseur, ledit conduit d'alimentation comprenant une telle corne, ainsi qu'un véhicule automobile comprenant un tel groupe motopropulseur.

### État de la technique

DE102011110285A1 divulgue une corne pour conduit d'alimentation d'un turbocompresseur.

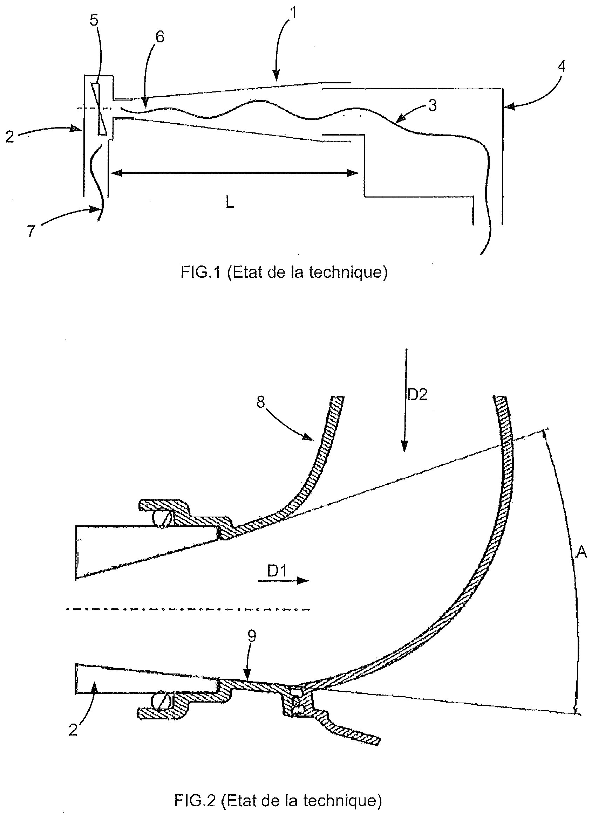

En référence à la figure 1 qui illustre schématiquement le contexte général, le conduit d'alimentation 1 en air d'un turbocompresseur 2 pour un moteur thermique suralimenté est un composant essentiel pour la performance globale du moteur. Ce conduit 1 favorise la quantité et la vitesse de l'air froid 3 sortant du filtre à air 4, et en direction du turbocompresseur 2 équipé de la turbine 5. Un flux d'air 6 en sortie du conduit 1 et en entrée du turbocompresseur 2 ayant les meilleures caractéristiques aérodynamiques assurera la meilleure prestation du moteur, notamment un gain de puissance. Ces caractéristiques aérodynamiques du flux d'air 6 passent notamment par une longueur L suffisante du conduit d'alimentation 1, dénué de zone coudée, avec une restriction de diamètre évolutive (décroissante) entre l'entrée et la sortie du conduit 1. Ces critères géométriques du conduit d'alimentation 1 définissent ainsi une section équivalente et une perméabilité de l'ensemble. Le flux d'air sortant du turbocompresseur 2, en aval de la turbine 5, est schématisé sous la référence 7.

Les architectures des véhicules font que le filtre à air 4 est classiquement fixé à la caisse du véhicule alors que le turbocompresseur 2 est fixé au moteur thermique. Il y a donc un mouvement relatif entre l'entrée et la sortie du conduit d'alimentation 1.

Ces conduits d'alimentation 1 sont donc en général composés de deux pièces, à savoir un conduit souple fixé au filtre à air 4 et une corne rigide fixée au turbocompresseur 2, en général par des vis.

L'installation d'un conduit souple en sortie du filtre à air 4 permet d'absorber ces mouvements relatifs entre le filtre à air 4 et le turbocompresseur 2 sans créer de sollicitations mécaniques entre tous les composants du groupe motopropulseur.

Cela induit par contre des contraintes de conception importantes pour atteindre les critères aérauliques puisqu'il faut :
- absorber des déplacements entre le moteur et la caisse en créant des zones déformables,
- créer une liaison mécanique entre le conduit souple et la corne,
- définir un parcours de fibre neutre du conduit d'alimentation 1 complet qui limitera le nombre de parties coudées,
- favoriser l'écoulement de l'air en optimisant les restrictions de diamètres entre l'entrée et la sortie du conduit d'alimentation 1,
- assurer une étanchéité en entrée du turbocompresseur 2, par exemple par le biais d'un joint.

Malheureusement, les architectures actuelles des compartiments moteurs tendent à rapprocher le turbocompresseur 2 et le filtre à air 4 et donc à implanter des conduits d'alimentation de plus en plus courts, présentant plusieurs coudes et à fortes restrictions de diamètres.

Il se pose donc un problème technique à résoudre qui consiste à garantir un flux d'air optimal en entrée du turbocompresseur 2 malgré l'ensemble des contraintes précitées, tout en s'affranchissant des contraintes liées à la fabrication du conduit d'alimentation 1, notamment la corne rigide, en particulier via une technique de moulage. Il existe aussi un besoin d'apporter un gain économique par rapport aux solutions existantes.

Dans le contexte de ce problème technique, la figure 2 montre une solution connue de l'état de la technique, au niveau de la corne rigide 8 fixée à l'entrée du turbocompresseur 2. Lorsque la corne 8 à l'entrée du turbocompresseur 2 est orientée de manière adaptée, si l'architecture du compartiment moteur le permet, l'évolution de la restriction de diamètre du conduit interne à la corne 8 est favorable vis-à-vis de l'entrée du turbocompresseur 2. En effet, les directions et les géométries de démoulage de la partie interne de la corne 8 permettent de créer une forme « conique » repérée 9 en amont du turbocompresseur 2 pour favoriser l'écoulement de l'air. Sur cet exemple, il peut être remarqué que la direction D1 de démoulage de la partie interne de la corne 8 est favorable à la création d'un angle A qui favorise l'aéraulique en entrée du turbocompresseur 2. La direction D2 est la direction de circulation de l'air entrant dans la corne 8.

Toutefois, il arrive que la solution de la figure 2 ne puisse pas être mise en œuvre. En particulier, la fabrication utilisant un tel démoulage D1 peut parfois être impossible. Lorsque l'orientation et les faisabilités du procédé de fabrication ne sont pas favorables à la création d'une telle partie conique 9, il existe un besoin de répondre au technique précité.

### Objet de l'invention

Le but de la présente invention est de proposer une corne pour conduit d'alimentation d'un turbocompresseur qui remédie conjointement aux inconvénients listés ci-dessus.

Notamment, un objet de l'invention est de fournir une telle corne qui permette concomitamment :
- des caractéristiques aérauliques adaptées pour le flux d'air entrant dans le turbocompresseur, notamment lorsque le compartiment moteur est contraignant,
- de faciliter sa fabrication, notamment par moulage,
- d'apporter un gain économique par rapport aux solutions existantes.

Ces objets peuvent être atteints par l'intermédiaire d'une corne pour conduit d'alimentation d'un turbocompresseur selon l'objet de la revendication indépendante 1.

L'insert délimite une partie de centrage destinée à coopérer avec une partie complémentaire du turbocompresseur d'une manière assurant une fonction de centrage de la corne par rapport au turbocompresseur lorsque le corps tubulaire est monté sur le turbocompresseur par l'intermédiaire desdits éléments de fixation.

La partie de centrage délimitée par l'insert est disposée en saillie par rapport au corps tubulaire lorsque l'insert est monté dans le logement de réception.

L'insert peut délimiter une face externe destinée à venir s'insérer dans un épaulement formé à la première extrémité du corps tubulaire et constituant ledit logement de réception.

Le conduit intérieur conique délimité par l'insert s'étend dans le prolongement et dans la continuité de la forme intérieure délimitée par le corps tubulaire, sans créer de discontinuité pour le fluide circulant à travers la corne.

L'insert (14) est fixé dans le logement de réception (15) par des moyens de fixation choisis parmi des éléments de collage, des éléments de soudure, des éléments de sertissage, des éléments de vissage.

L'insert est monté librement axialement dans le logement de réception et est bloqué axialement dans le logement de réception par le corps tubulaire d'un premier côté et par le turbocompresseur d'un deuxième côté opposé, entre lesquels l'insert est pris en sandwich lorsque la corne est fixée sur le turbocompresseur.

L'insert comprend des premiers éléments d'indexation angulaire coopérant automatiquement avec des deuxièmes éléments d'indexation angulaire solidaires du corps tubulaire, lorsque l'insert est monté dans le logement de réception, d'une manière bloquant et positionnant angulairement l'insert par rapport au corps tubulaire.

Le corps tubulaire peut présenter une forme générale ayant, sur sa longueur, deux inflexions successives orientées selon des sens opposés.

Un groupe motopropulseur pourra comprendre un turbocompresseur et un conduit d'alimentation destiné à alimenter en fluide l'entrée du turbocompresseur, ledit conduit d'alimentation comprenant une telle corne fixée à l'entrée du turbocompresseur au niveau de la première extrémité du corps tubulaire.

Le conduit d'alimentation peut comprendre un tube flexible constitué par une pièce indépendante de la corne et ayant d'une part une première extrémité raccordée à une deuxième extrémité du corps tubulaire opposée à la première extrémité du corps tubulaire fixée à l'entrée du turbocompresseur, et d'autre part une deuxième extrémité raccordée à la sortie d'un dispositif de filtration d'air d'admission.

Le conduit intérieur conique délimité par l'insert peut s'étendre dans le prolongement et dans la continuité de la forme intérieure délimitée par le turbocompresseur, sans créer de discontinuité pour le fluide circulant dans la corne.

Le groupe motopropulseur peut comprendre au moins un élément d'étanchéité axiale, de type joint cylindrique ou joint plat, porté par l'insert et assurant l'étanchéité fluidique entre l'insert et le turbocompresseur.

Le groupe motopropulseur peut comprendre au moins un élément d'étanchéité radiale, de type joint torique, porté par l'insert ou par le turbocompresseur et assurant l'étanchéité fluidique entre l'insert et le turbocompresseur.

Un véhicule automobile pourra comprendre un tel groupe motopropulseur.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2, déjà décrites, sont des solutions de l'art antérieur,
- la figure 3 est une vue en coupe longitudinale d'un conduit d'alimentation muni d'un exemple de corne selon l'invention,
- la figure 4 montre plus en détail la corne et sa technique de fabrication par moulage,
- la figure 5 est une vue en perspective d'une coupe longitudinale de la corne fixée à un turbocompresseur,
- la figure 6 est une vue en perspective de la sortie de la corne,
- et les figures 7 à 10 montrent quatre variantes envisageables pour la mise en œuvre de l'étanchéité entre la corne et le turbocompresseur.

### Description de modes préférentiels de l'invention

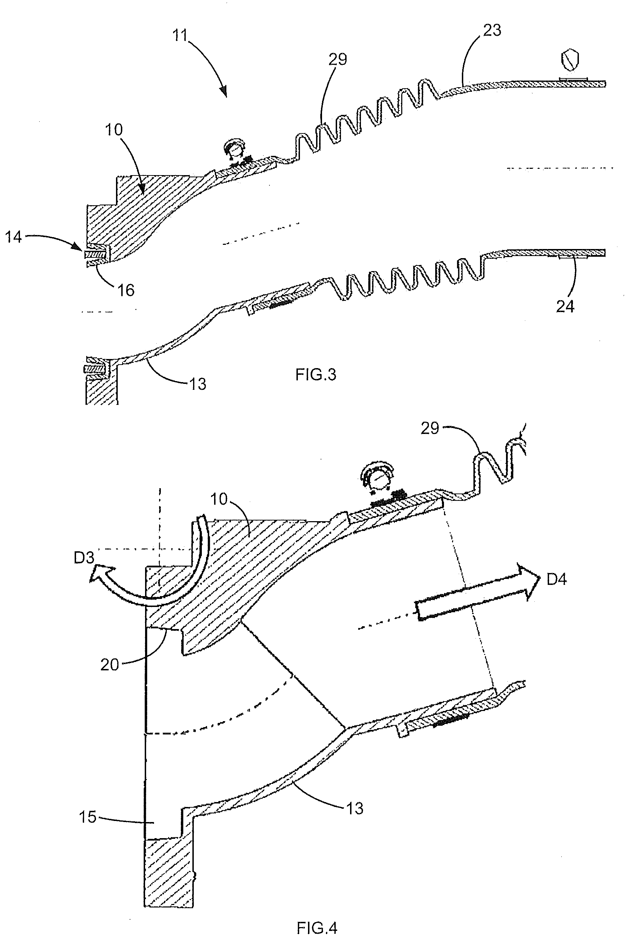

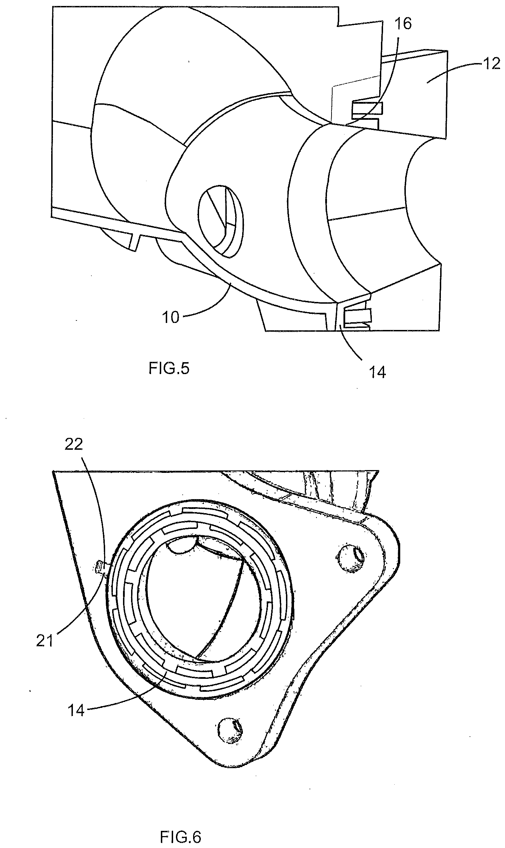

L'invention qui va maintenant être décrite en référence aux figures 3 à 10 concerne de manière générale une corne 10 pour conduit d'alimentation 11 destiné à l'alimentation en fluide d'un turbocompresseur 12, comprenant un corps tubulaire 13 ayant des éléments de fixation permettant de raccorder une première extrémité du corps tubulaire 13 à une entrée du turbocompresseur 12. De tels éléments de fixation peuvent être de toute nature mécanique, tels que mettant en œuvre une technique de vissage ou d'encliquetage par exemple.

L'invention porte aussi sur un groupe motopropulseur comprenant le turbocompresseur 12 et le conduit d'alimentation 11 destiné à alimenter en fluide l'entrée du turbocompresseur 12, ce conduit d'alimentation 11 comprenant une telle corne 10 fixée à l'entrée du turbocompresseur 12 au niveau de la première extrémité du corps tubulaire 13. Enfin, elle concerne un véhicule automobile comprenant un tel groupe motopropulseur.

Le fluide destiné à alimenter l'entrée du turbocompresseur 12 et à circuler, pour cela, à l'intérieur du conduit d'alimentation 11 peut être quelconque, comme par exemple de l'air, de l'eau, de la vapeur, de l'huile.

Selon une caractéristique importante, la corne 10 comprend un insert 14 constitué par une pièce indépendante du corps tubulaire 13, monté dans un logement de réception 15 délimité par le corps tubulaire 13. L'insert 14 délimite un conduit intérieur conique 16 présentant un rétrécissement de section, notamment un rétrécissement progressivement continu (sans discontinuité ou rupture brutale), dans un sens allant en direction du turbocompresseur 12 lorsque le corps tubulaire 13 est monté sur le turbocompresseur 12 par l'intermédiaire des éléments de fixation.

Les différentes pièces constitutives du conduit d'alimentation 11 peuvent notamment être formées dans des matériaux à base de polymères, globalement plastiques. Il reste toutefois possible d'envisager l'utilisation d'autres matériaux tels que de l'aluminium, de la fonte etc.

L'insert 14 peut être formé dans une matière plastique ou dans une matière métallique. Il vient s'insérer en fin de conduite délimitée par le corps tubulaire 13. Le conduit intérieur conique 16 délimité par l'insert 14 s'étend de préférence dans le prolongement et dans la continuité de la forme intérieure délimitée par le corps tubulaire 13, sans créer de discontinuité pour le fluide circulant à travers la corne 10. Cela permet d'éviter des singularités géométriques susceptibles sinon d'être génératrices de perte de charge pour le fluide circulant dans la corne 10.

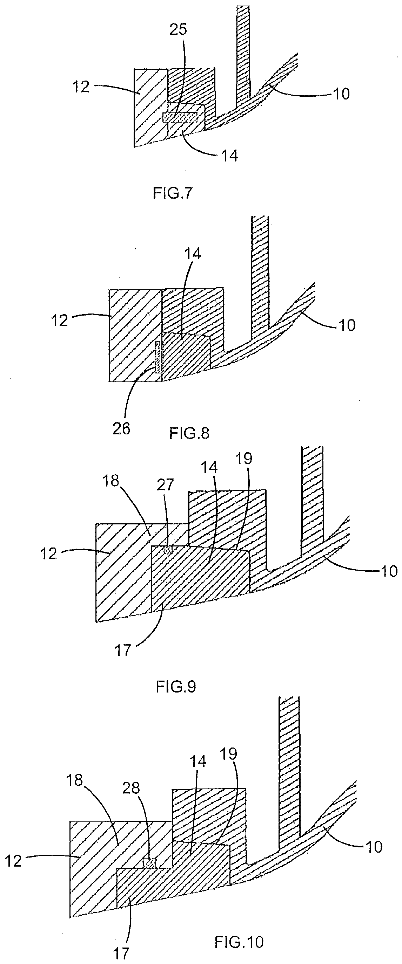

En référence aux figures 9 et 10, l'insert 14 peut avantageusement mais optionnellement délimiter une partie de centrage 17 destinée à coopérer avec une partie complémentaire 18 du turbocompresseur 12, d'une manière assurant une fonction de centrage de la corne 10 par rapport au turbocompresseur 12 lorsque le corps tubulaire 13 est monté sur le turbocompresseur 12 par l'intermédiaire des éléments de fixation. Notamment, la partie de centrage 17 délimitée par l'insert 14 est disposée en saillie par rapport au corps tubulaire 13 lorsque l'insert 14 est monté dans le logement de réception 15. La partie complémentaire 18 peut alors se présenter sous la forme d'un creux délimité par une pièce du turbocompresseur 12. La partie de centrage 17 est par exemple absente sur les variantes des figures 7 et 8.

Selon un mode de réalisation particulier, l'insert 14 délimite une face externe 19 destinée à venir s'insérer dans un épaulement 20 formé au niveau de la première extrémité du corps tubulaire 13 et constituant le logement de réception 15.

Dans une première variante, l'insert 14 est fixé dans le logement de réception 15 par des moyens de fixation (non représentés) choisis parmi des éléments de collage, des éléments de soudure, des éléments de sertissage, des éléments de vissage.

Alternativement, une deuxième variante prévoit que l'insert 14 peut être monté librement axialement dans le logement de réception 15 et être bloqué axialement dans le logement de réception 15 non pas par de tels moyens de fixation, mais plus simplement par le corps tubulaire 13 d'un premier côté et par le turbocompresseur 12 d'un deuxième côté opposé audit premier sens, entre lesquels l'insert 14 est pris en sandwich lorsque la corne 10 est fixée sur le turbocompresseur 12.

Dans le cas où la corne 10 présente des formes géométriques internes complexes, le profil du conduit intérieur conique 16 peut présenter des formes géométriques complexes également. La bonne conformation de l'ensemble de la corne 10 nécessite alors un positionnement relatif fiable et prédéterminé de l'insert 14 par rapport au corps tubulaire 13. Pour s'assurer de la continuité de l'ensemble des surfaces successives à l'intérieur de la corne, l'insert 14 peut alors comprendre des premiers éléments d'indexation angulaire 21 coopérant automatiquement avec des deuxièmes éléments d'indexation angulaire 22 solidaires du corps tubulaire 13, lorsque l'insert 14 est monté dans le logement de réception 15, d'une manière bloquant et positionnant angulairement l'insert 14 par rapport au corps tubulaire 13, notamment autour de la direction moyenne d'écoulement du fluide circulant à travers la corne 10 à proximité de son extrémité fixée au turbocompresseur 12. Ces éléments d'indexation angulaire 21, 22 assureront, au montage, une bonne orientation de l'ensemble.

Selon un mode de réalisation particulier, comme cela est illustré sur les figures sans toutefois que cela ne soit limitatif quant à la liberté de conception de la corne 10, quant à son orientation et à sa configuration spatiale, le corps tubulaire 13 présente une forme générale ayant, sur sa longueur (considérée le long de la direction d'extension incurvée suivant laquelle s'étend son conduit interne), deux inflexions successives orientées selon des sens opposés l'une par rapport à l'autre. Ces deux inflexions sont visibles par exemple sur la figure 4, avec une première inflexion du côté gauche de la corne, définissant une concavité orientée vers le haut, et avec une deuxième inflexion du côté droit de la corne, définissant une concavité orientée vers le bas. Il va de soi que ces notions de droite, de gauche, de haut et de bas sont totalement arbitraires en ce sens qu'elles ne sont liées qu'à l'orientation spécifique adoptée par la corne 10 sur la figure 4. Le corps tubulaire 13 peut notamment être obtenu par une technique de moulage. Le conduit intérieur conique 16 peut se dénoyauter en deux parties distinctes : une première partie inférieure gauche sur la figure 4 apte à se démouler suivant un mouvement de rotation (suivant la direction angulaire D3) dirigé vers une direction destinée à être orientée vers le turbocompresseur 12, cette première partie correspondant à la formation de la première inflexion, et une deuxième partie supérieure droite sur la figure 4 apte à se démouler selon la direction D4 orientée vers la droite, correspondant à la formation de la deuxième inflexion. En raison des besoins de dépouilles pour le mouvement de rotation selon D3, il peut être observé sur la figure 4 que la géométrie du corps tubulaire 13 ne permet pas de créer naturellement une partie conique comme cela était le cas dans l'art antérieur illustré sur la figure 2. C'est donc l'une des raisons de l'existence de l'insert 14 que de répondre à cette problématique.

Selon un mode de réalisation particulier, le conduit d'alimentation 11 comprend un tube flexible 23 constitué par une pièce indépendante de la corne 10 et ayant d'une part une première extrémité raccordée à une deuxième extrémité du corps tubulaire 13 opposée à la première extrémité du corps tubulaire 13 qui est fixée à l'entrée du turbocompresseur 12, et d'autre part une deuxième extrémité raccordée à la sortie d'un dispositif de filtration d'air d'admission 24. Le tube flexible 23 est donc configuré de sorte à être déformable élastiquement et peut présenter sur tout ou partie de sa longueur, en particulier du côté de la corne 10, un train de spires radiales 29.

Le conduit intérieur conique 16 délimité par l'insert 14 s'étend de préférence dans le prolongement et dans la continuité de la forme intérieure délimitée par le turbocompresseur 12, sans créer de discontinuité pour le fluide circulant dans la corne 10. Cela permet d'éviter des singularités géométriques susceptibles, sinon, d'être génératrices de perte de charge pour le fluide circulant sortant de la corne 10 et entrant dans le turbocompresseur 12.

En référence maintenant aux figures 7 et 8, le groupe motopropulseur peut comprendre au moins un élément d'étanchéité axiale porté par l'insert 14 et assurant l'étanchéité fluidique entre l'insert 14 et le turbocompresseur 12. Cet élément d'étanchéité axiale peut notamment être de type joint cylindrique 25 (figure 7) ou de type joint plat 26 (figure 8).

Alternativement ou en combinaison, le groupe motopropulseur peut comprendre au moins un élément d'étanchéité radiale configuré de sorte à assurer l'étanchéité fluidique entre l'insert 14 et le turbocompresseur 12. Cet élément d'étanchéité radiale peut notamment être de type joint torique 27 porté par l'insert 14 (figure 9) ou de type joint torique 28 porté par le turbocompresseur 12 (figure 10).

De manière préférentielle, l'insert permet d'adapter une même corne à des entrées de turbocompresseur présentant des diamètres différents. L'insert joue donc également un rôle de pièce d'adaptation.

## Revendications

1. Corne (10) pour conduit d'alimentation (11) d'un turbocompresseur (12), comprenant un corps tubulaire (13) ayant des éléments de fixation permettant de raccorder une première extrémité du corps tubulaire (13) à une entrée du turbocompresseur (12), **caractérisée en ce que** ladite corne (10) comprend un insert (14) constitué par une pièce indépendante dudit corps tubulaire (13), monté dans un logement de réception (15) délimité par ledit corps (13), ledit insert (14) délimitant :
- un conduit intérieur conique (16) présentant un rétrécissement progressivement continu de section dans un sens allant en direction du turbocompresseur (12) lorsque le corps tubulaire (13) est monté sur le turbocompresseur (12) par l'intermédiaire desdits éléments de fixation, le conduit conique s'étendant dans le prolongement et dans la continuité de la forme intérieure délimitée par le turbocompresseur (12) et sans créer de discontinuité pour le fluide circulant dans la corne (10) et de singularités géométriques susceptibles d'être génératrices de perte de charge pour le fluide circulant, la corne est **caractérisée en ce que** ledit insert (14) délimite
- une partie de centrage (17) destinée à coopérer avec une partie complémentaire (18) du turbocompresseur (12) d'une manière assurant une fonction de centrage de la corne (10) par rapport au turbocompresseur (12) lorsque le corps tubulaire (13) est monté sur le turbocompresseur (12) par l'intermédiaire desdits éléments de fixation.

2. Corne (10) selon la revendication 1, **caractérisée en ce que** la partie de centrage (17) délimitée par l'insert (14) est disposée en saillie par rapport au corps tubulaire (13) lorsque l'insert (14) est monté dans le logement de réception (15).

3. Corne (10) selon l'une quelconque des revendications 1 et 2, **caractérisée en ce que** l'insert (14) délimite une face externe (19) destinée à venir s'insérer dans un épaulement (20) formé à la première extrémité du corps tubulaire (13) et constituant ledit logement de réception (15).

4. Corne (10) selon l'une des revendications 1 à 3, **caractérisée en ce que** le conduit intérieur conique (16) délimité par l'insert (14) s'étend dans le prolongement et dans la continuité de la forme intérieure délimitée par le corps tubulaire (13), sans créer de discontinuité pour le fluide circulant à travers la corne (10).

5. Corne (10) selon l'une des revendications 1 à 4, **caractérisée en ce que** l'insert (14) est fixé dans le logement de réception (15) par des moyens de fixation choisis parmi des éléments de collage, des éléments de soudure, des éléments de sertissage, des éléments de vissage.

6. Corne (10) selon l'une des revendications 1 à 4, **caractérisée en ce que** l'insert (14) est monté librement axialement dans le logement de réception (15) et est bloqué axialement dans le logement de réception (15) par le corps tubulaire (13) d'un premier côté et par le turbocompresseur (12) d'un deuxième côté opposé, entre lesquels l'insert (14) est pris en sandwich lorsque la corne (10) est fixée sur le turbocompresseur (12).

7. Corne (10) selon l'une quelconque des revendications 1 à 6, **caractérisée en ce que** l'insert (14) comprend des premiers éléments d'indexation angulaire (21) coopérant automatiquement avec des deuxièmes éléments d'indexation angulaire (22) solidaires du corps tubulaire (13), lorsque l'insert (14) est monté dans le logement de réception (15), d'une manière bloquant et positionnant angulairement l'insert (14) par rapport au corps tubulaire (13).

8. Corne (10) selon l'une quelconque des revendications 1 à 7, **caractérisée en ce que** le corps tubulaire (13) présente une forme générale ayant, sur sa longueur, deux inflexions successives orientées selon des sens opposés.

9. Groupe motopropulseur comprenant un turbocompresseur (12) et un conduit d'alimentation (11) destiné à alimenter en fluide l'entrée du turbocompresseur (12), ledit conduit d'alimentation (11) comprenant une corne (10) selon l'une quelconque des revendications précédentes fixée à l'entrée du turbocompresseur (12) au niveau de la première extrémité du corps tubulaire (13).

10. Groupe motopropulseur selon la revendication 9, **caractérisé en ce que** le conduit d'alimentation (11) comprend un tube flexible (23) constitué par une pièce indépendante de la corne (10) et ayant d'une part une première extrémité raccordée à une deuxième extrémité du corps tubulaire (13) opposée à la première extrémité du corps tubulaire (13) fixée à l'entrée du turbocompresseur (12), et d'autre part une deuxième extrémité raccordée à la sortie d'un dispositif de filtration d'air d'admission (24).

11. Groupe motopropulseur selon l'une des revendications 9 ou 10, **caractérisé en ce que** le conduit intérieur conique (16) délimité par l'insert (14) s'étend dans le prolongement et dans la continuité de la forme intérieure délimitée par le turbocompresseur (12), sans créer de discontinuité pour le fluide circulant dans la corne (10).

12. Groupe motopropulseur selon l'une des revendications 9 à 11, **caractérisé en ce qu'**il comprend au moins un élément d'étanchéité axiale, de type joint cylindrique (25) ou joint plat (26), porté par l'insert (14) et assurant l'étanchéité fluidique entre l'insert (14) et le turbocompresseur (12).

13. Groupe motopropulseur selon l'une des revendications 9 à 12, **caractérisé en ce qu'**il comprend au moins un élément d'étanchéité radiale, de type joint torique (27, 28), porté par l'insert (14) ou par le turbocompresseur (12) et assurant l'étanchéité fluidique entre l'insert (14) et le turbocompresseur (12).

14. Véhicule automobile comprenant un groupe motopropulseur selon l'une quelconque des revendications 9 à 13.

## Patentansprüche

1. Horn (10) für einen Versorgungskanal (11) eines Turboladers (12), das einen rohrförmigen Körper (13) enthält, der Befestigungselemente hat, die es ermöglichen, ein erstes Ende des rohrförmigen Körpers (13) an einen Eingang des Turboladers (12) anzuschließen, **dadurch gekennzeichnet, dass** das Horn (10) einen aus einem vom rohrförmigen Körper (13) unabhängigen Bauteil bestehenden Einsatz (14) enthält, der in einen vom Körper (13) begrenzten Aufnahmesitz (15) montiert ist, wobei der Einsatz (14) begrenzt:
einen kegelförmigen inneren Kanal (16), der eine progressiv durchgehende Querschnittsverengung in einer zum Turbolader (12) gehenden Richtung aufweist, wenn der rohrförmige Körper (13) mittels der Befestigungselemente auf den Turbolader (12) montiert ist, wobei der kegelförmige Kanal sich in der Verlängerung und der Kontinuität der vom Turbolader (12) begrenzten inneren Form und ohne Erzeugung einer Unterbrechung für das im Horn (10) zirkulierende Fluid und geometrischer Besonderheiten erstreckt, die Druckverluste für das zirkulierende Fluid erzeugen können,
wobei das Horn **dadurch gekennzeichnet ist, dass** der Einsatz (14) einen Zentrierteil (17) begrenzt, der dazu bestimmt ist, mit einem komplementären Teil (18) des Turboladers (12) auf eine Weise zusammenzuwirken, die eine Funktion des Zentrierens des Horns (10) bezüglich des Turboladers (12) gewährleistet, wenn der rohrförmige Körper (13) mittels der Befestigungselemente auf den Turbolader (12) montiert wird.

2. Horn (10) nach Anspruch 1, **dadurch gekennzeichnet, dass** der vom Einsatz (14) begrenzte Zentrierteil (17) bezüglich des rohrförmigen Körpers (13) vorspringend angeordnet ist, wenn der Einsatz (14) in den Aufnahmesitz (15) montiert ist.

3. Horn (10) nach einem der Ansprüche 1 und 2, **dadurch gekennzeichnet, dass** der Einsatz (14) eine Außenseite (19) begrenzt, die dazu bestimmt ist, sich in eine Schulter (20) einzufügen, die am ersten Ende des rohrförmigen Körpers (13) ausgebildet ist und den Aufnahmesitz (15) bildet.

4. Horn (10) nach einem der Ansprüche 1 bis 3, **dadurch gekennzeichnet, dass** der vom Einsatz (14) begrenzte kegelförmige innere Kanal (16) sich in der Verlängerung und in der Kontinuität der vom rohrförmigen Körper (13) begrenzten inneren Form ohne Erzeugung einer Unterbrechung für das durch das Horn (10) zirkulierende Fluid erstreckt.

5. Horn (10) nach einem der Ansprüche 1 bis 4, **dadurch gekennzeichnet, dass** der Einsatz (14) im Aufnahmesitz (15) durch Befestigungseinrichtungen befestigt wird, die ausgewählt werden aus Klebelementen, Schweißelementen, Einspannelementen, Schraubelementen.

6. Horn (10) nach einem der Ansprüche 1 bis 4, **dadurch gekennzeichnet, dass** der Einsatz (14) axial frei in den Aufnahmesitz (15) montiert wird und im Aufnahmesitz (15) vom rohrförmigen Körper (13) auf einer ersten Seite und vom Turbolader (12) auf einer zweiten entgegengesetzten Seite axial blockiert wird, zwischen denen der Einsatz (14) sandwichartig eingeklemmt wird, wenn das Horn (10) am Turbolader (12) befestigt ist.

7. Horn (10) nach einem der Ansprüche 1 bis 6, **dadurch gekennzeichnet, dass** der Einsatz (14) erste Winkelindexierungselemente (21) enthält, die, wenn der Einsatz (14) in den Aufnahmesitz (15) montiert wird, automatisch mit fest mit dem rohrförmigen Körper (13) verbundenen zweiten Winkelindexierungselementen (22) in einer Weise zusammenwirken, die den Einsatz (14) bezüglich des rohrförmigen Körpers (13) blockiert und winkelmäßig positioniert.

8. Horn (10) nach einem der Ansprüche 1 bis 7, **dadurch gekennzeichnet, dass** der rohrförmige Körper (13) eine allgemeine Form aufweist, die über ihre Länge zwei in entgegengesetzte Richtungen ausgerichtete aufeinanderfolgende Krümmungen hat.

9. Antriebseinheit, die einen Turbolader (12) und einen Versorgungskanal (11) enthält, der dazu bestimmt ist, den Eingang des Turboladers (12) mit Fluid zu versorgen, wobei der Versorgungskanal (11) ein Horn (10) nach einem der vorhergehenden Ansprüche enthält, das am Eingang des Turboladers (12) im Bereich des ersten Endes des rohrförmigen Körpers (13) befestigt ist.

10. Antriebseinheit nach Anspruch 9, **dadurch gekennzeichnet, dass** der Versorgungskanal (11) ein biegsames Rohr (23) enthält, das von einem vom Horn (10) unabhängigen Bauteil gebildet wird und von dem einerseits ein erstes Ende an ein zweites Ende des rohrförmigen Körpers (13) entgegengesetzt zum am Eingang des Turboladers (12) befestigten ersten Ende des rohrförmigen Körpers (13) angeschlossen ist, und andererseits ein zweites Ende an den Ausgang einer Ansaugluft-Filtervorrichtung (24) angeschlossen ist.

11. Antriebseinheit nach einem der Ansprüche 9 oder 10, **dadurch gekennzeichnet, dass** der vom Einsatz (14) begrenzte kegelförmige innere Kanal (16) sich in der Verlängerung und der Kontinuität der vom Turbolader (12) begrenzten inneren Form ohne Erzeugung einer Unterbrechung für das im Horn (10) zirkulierende Fluid erstreckt.

12. Antriebseinheit nach einem der Ansprüche 9 bis 11, **dadurch gekennzeichnet, dass** sie mindestens ein axiales Dichtungselement von der Art zylindrische Dichtung (25) oder Flachdichtung (26) enthält, das vom Einsatz (14) getragen wird und die fluidische Dichtheit zwischen dem Einsatz (14) und dem Turbolader (12) gewährleistet.

13. Antriebseinheit nach einem der Ansprüche 9 bis 12, **dadurch gekennzeichnet, dass** sie mindestens ein radiales Dichtungselement von der Art O-Ring (27, 28) enthält, das vom Einsatz (14) oder vom Turbolader (12) getragen wird und die fluidische Dichtheit zwischen dem Einsatz (14) und dem Turbolader (12) gewährleistet.

14. Kraftfahrzeug, das eine Antriebseinheit nach einem der Ansprüche 9 bis 13 enthält.

## Claims

1. Flange (10) for a supply duct (11) of a turbocharger (12), comprising a tubular body (13) having fastening elements making it possible to connect a first end of the tubular body (13) to an inlet of the turbocharger (12), **characterized in that** said flange (10) comprises an insert (14) formed by a part independent of said tubular body (13) and mounted in a receiving housing (15) delimited by said body (13), said insert (14) delimiting:
- a conical inner duct (16) having a cross-sectionally progressively continuous narrowing in a direction towards the turbocharger (12) when the tubular body (13) is mounted on the turbocharger (12) by way of said fastening elements, the conical duct running in the extension of and in the continuation of the inner shape delimited by the turbocharger (12) and without creating any discontinuity for the fluid circulating in the flange (10) and any geometrical singularities liable to generate a pressure drop for the circulating fluid, the flange being **characterized in that** said insert (14) delimits
a centring portion (17) intended to cooperate with a complementary portion (18) of the turbocharger (12) in a manner ensuring a function of centring the flange (10) with respect to the turbocharger (12) when the tubular body (13) is mounted on the turbocharger (12) by way of said fastening elements.

2. Flange (10) according to Claim 1, **characterized in that** the centring portion (17) delimited by the insert (14) is arranged so as to project with respect to the tubular body (13) when the insert (14) is mounted in the receiving housing (15).

3. Flange (10) according to either one of Claims 1 and 2, **characterized in that** the insert (14) delimits an outer face (19) intended to be inserted into a shoulder (20) formed at the first end of the tubular body (13) and constituting said receiving housing (15).

4. Flange (10) according to one of Claims 1 to 3, **characterized in that** the conical inner duct (16) delimited by the insert (14) runs in the extension of and in the continuation of the inner shape delimited by the tubular body (13) without creating any discontinuity for the fluid circulating through the flange (10).

5. Flange (10) according to one of Claims 1 to 4, **characterized in that** the insert (14) is fastened in the receiving housing (15) by fastening means chosen from adhesive bonding elements, welding elements, crimping elements and screwing elements.

6. Flange (10) according to one of Claims 1 to 4, **characterized in that** the insert (14) is mounted freely axially in the receiving housing (15) and is blocked axially in the receiving housing (15) by the tubular body (13) on a first side and by the turbocharger (12) on an opposite second side, between which the insert (14) is sandwiched when the flange (10) is fastened to the turbocharger (12) .

7. Flange (10) according to any one of Claims 1 to 6, **characterized in that** the insert (14) comprises first angular indexing elements (21) automatically cooperating with second angular indexing elements (22) secured to the tubular body (13) when the insert (14) is mounted in the receiving housing (15), in a manner in which the insert (14) is blocked and angularly positioned with respect to the tubular body (13).

8. Flange (10) according to any one of Claims 1 to 7, **characterized in that** the tubular body (13) has a general shape having, over its length, two successive inflexions oriented in opposite directions.

9. Propulsion unit comprising a turbocharger (12) and a supply duct (11) intended to supply fluid to the inlet of the turbocharger (12), said supply duct (11) comprising a flange (10) according to any one of the preceding claims that is fastened to the inlet of the turbocharger (12) at the first end of the tubular body (13).

10. Propulsion unit according to Claim 9, **characterized in that** the supply duct (11) comprises a flexible tube (23) formed by a part independent of the flange (10) and having, on the one hand, a first end connected to a second end of the tubular body (13) that is opposed to the first end of the tubular body (13) that is fastened to the inlet of the turbocharger (12), and, on the other hand, a second end connected to the outlet of a device (24) for filtering intake air.

11. Propulsion unit according to either of Claims 9 and 10, **characterized in that** the conical inner duct (16) delimited by the insert (14) runs in the extension of and in the continuation of the inner shape delimited by the turbocharger (12) without creating any discontinuity for the fluid circulating in the flange (10).

12. Propulsion unit according to one of Claims 9 to 11, **characterized in that** it comprises at least one axial sealing element, of the cylindrical seal (25) or flat seal (26) type, borne by the insert (14) and providing fluid sealing between the insert (14) and the turbocharger (12).

13. Propulsion unit according to one of Claims 9 to 12, **characterized in that** it comprises at least one radial sealing element, of the O-ring seal type (27, 28), borne by the insert (14) or by the turbocharger (12) and providing fluid sealing between the insert (14) and the turbocharger (12).

14. Motor vehicle comprising a propulsion unit according to any one of Claims 9 to 13.
